# EUROPÄISCHE PATENTSCHRIFT

(11) **EP 2 288 869 B1**
(45) Veröffentlichungstag und Bekanntmachung des Hinweises auf die Patenterteilung: **04.01.2012**
(21) Anmeldenummer: 09761689.0
(22) Anmeldetag: 08.06.2009
(51) Int. Cl.: G01B 13/12, G01B 13/14

(54) **VERFAHREN ZUM MESSEN EINER DISTANZ VON EINER BASISFLÄCHE ZU EINER SICH VERJÜNGENDEN FLÄCHE EINES KÖRPERS**
METHOD FOR MEASURING A DISTANCE FROM A BASE AREA TO A TAPERING AREA OF A BODY
PROCÉDÉ POUR MESURER UNE DISTANCE DEPUIS UNE SURFACE DE BASE JUSQU'À UNE SURFACE ÉFFILÉE D'UN CORPS

(30) Priorität: 09.06.2008 EP 08157854
(43) Veröffentlichungstag der Anmeldung: 02.03.2011
(73) Patentinhaber: Marposs Societa' Per Azioni, 40010 Bentivoglio (BO) (IT)
(72) Erfinder: EGGER, Hans, CH-3174 Thörishaus (CH); TSCHANNEN, Werner, CH-3202 Frauenkappelen (CH)
(74) Vertreter: BOVARD AG
(86) Internationale Anmeldenummer: PCT/EP2009/057035
(87) Internationale Veröffentlichungsnummer: WO 2009/150126

(56) Entgegenhaltungen:
- DE-A1- 4 234 788
- DE-A1- 10 303 250
- DE-A1- 19 534 259
- JP-A- 57 191 507
- US-A1- 2007 101 597

## Beschreibung

Die vorliegende Erfindung bezieht sich auf ein Verfahren zum Messen einer Distanz von einer Basisfläche zu einem Querschnitt mit einem vorgegebenen Durchmesser einer eine Erhebung oder Vertiefung bildenden, sich verjüngenden Fläche mit kreisförmiger Querschnittsform eines Körpers. Ferner bezieht sich die Erfindung auf ein Messsystem zur Durchführung dieses Verfahrens.

Im Stand der Technik sind Werkstücke bekannt, die in der Oberfläche eine Ansenkung mit unterschiedlichen Formen und einer präzisen Tiefe aufweisen. Es können auch Ansenkungen sein, die mit oder ohne Durchgangsbohrungen ausgestattet sind. Weiter können derartige Werkstücke auch eine nach aussen gerichtete konus- oder kugelförmige Form aufweisen. Die entsprechend bearbeitete Oberfläche dieser Körper muss sehr genau sein, so werden beispielsweise derartige Körper, deren bearbeitete Flächen eine Ansenkung ist, die in eine durchgehende Bohrung mündet, als Dichtfläche verwendet werden, wie sie in verschiedensten Einsatzbereichen benutzt werden. Damit der Konus oder die Kugel, der bzw. die in die Ansenkung eingesetzt werden, mit einem definierten Abstand zur Basisfläche dichten kann, ist eine genaue Bearbeitung der Fläche der Ansenkung erforderlich und eine entsprechende Kontrolle notwendig. Diese Kontrolle besteht aus einer genauen Tiefenmessung der Ansenkung.

Es ist deshalb insbesondere notwendig, Parameter der Ansenktiefe, die irgendeine Form aufweisen kann, schnell und sehr präzise zu messen. Dabei soll der Wartungsaufwand für die Messeinrichtung vernachlässigbar klein sein.

Das Messen von festgelegten Tiefenabmessungen bei Ansenkungen ist im Stand der Technik bekannt und wird bereits in der metallverarbeitenden Industrie eingesetzt. So wird beispielsweise mittels eines mechanischen Messverfahrens zum Bestimmen der Senktiefe beispielsweise eines Ventilsitzes ein Eichnormal mit einer definierten Basis in die Ansenkung gelegt und die Distanz zu einer definierten Basisfläche gemessen. Der Nachteil besteht darin, dass bei verschmutzter Oberfläche die Messung nicht genau ist. Auch kann durch zu starkes Einlegen des Eichnormals die Ansenkung und/oder das Eichnormal beschädigt werden. Zudem werden durch dieses Messverfahren Formfehler, welche die Ansenkungen und die Eichnormale aufweisen können, nicht berücksichtigt.

Eine Druckmessung zur Distanzbestimmung ist aus JP-57191507 oder DE-4234788 bekannt.

Die Aufgabe der vorliegenden Erfindung besteht somit darin, ein neues Verfahren zum Messen einer Distanz von einer Basisfläche zu einem Querschnitt einer eine Erhebung oder Vertiefung bildenden, sich verjüngenden Fläche mit kreisförmiger Querschnittsform eines Körpers, wobei der Querschnitt einen vorgegebenen Durchmesser aufweist, zu schaffen, mit welchem die Nachteile des oben beschriebenen Standes der Technik ausgeräumt werden können. Das neue Verfahren soll insbesondere bewirken, dass die Ausmessung der sich verjüngenden Fläche schnell und sehr präzise durchgeführt werden kann, wobei der Wartungsaufwand für die Messeinrichtung vernachlässigbar klein gehalten werden soll.

Erfindungsgemäss erfolgt die Lösung dieser Aufgabe dadurch, dass ein Messkörper mit einem Durchmesser auf der Basisfläche angeordnet wird, derart, dass zwischen der Querschnittfläche mit dem Durchmesser des Körpers und dem Messkörper eine Distanz in Form eines Spaltes gebildet wird, und dass ein fluides Medium durch den Spalt gepresst wird und der Druck und/oder die Durchflussmenge des fluiden Mediums gemessen wird, und dass aufgrund des gemessenen Drucks bzw. der Durchflussmenge in einer Auswerteeinrichtung der Distanzwert ermittelt wird.

Eine weitere Aufgabe der Erfindung besteht darin, ein Messsystem zur Durchführung dieses Verfahrens zu schaffen, was erfindungsgemäss dadurch gelöst wird, dass dieses Messsystem eine Messeinheit zur Messung des Drucks und/oder des Durchflussmenge des zugeführten Gas und/oder der zugeführten Flüssigkeit zu einem Spalt zwischen einer Senkung einer Basis, einem Messkörper und eine Auswerteeinrichtung zur Ermittlung des Distanzwertes aus dem gemessenen Druck bzw. aus der gemessenen Durchflussmenge umfasst.

Insbesondere werden diese Ziele durch die Erfindung dadurch erreicht, dass ein Messkörper relativ zu einer Basisfläche so angeordnet wird dass zwischen dem Messkörpers und der definierten Querschnittfläche ein definierter Abstand in Form eines Spaltes entsteht. Mittels einer Vorrichtung wird ein gasförmiges- und/oder flüssiges Medium mit einem definierten Druck durch den Ringspalt geleitet. Der Druck bzw. die Durchflussmenge, die dabei gemessen werden, ist proportional zum Ringspalt zwischen dem Messkörper und der Senkung. Aufgrund dieses gemessenen Drucks bzw. dieser Durchflussmenge kann in einer Auswerteeinrichtung der Distanzwert ermittelt werden. Dadurch kann rasch überprüft werden, ob ein Distanzwert und/oder ein Durchflusswert der sich verjüngenden Fläche innerhalb eines Toleranzbereichs, an der Grenze zu einem Toleranzbereich oder ausserhalb eines Toleranzbereichs liegt.

Ein solches Verfahren hat insbesondere den Vorteil, dass die Ausmessung der sich verjüngenden Fläche schnell und sehr präzise durchgeführt werden kann. Durch diese Art der Messung werden zudem Beschädigungen an der sich verjüngenden Fläche ausgeschlossen. Gegenüber einem mechanischen Messverfahren können allfällige einsatzrelevante Funktionen der sich verjüngenden Fläche berücksichtigt werden, wie sie beim Betrieb einer fertig montierten Einheit auftreten. Das Messverfahren kann zudem in einer normalen Produktionsumgebung eingesetzt werden, wobei eine Produktionssteigerung infolge gesenkter Taktzeiten erzielt wird. Mit dieser Art des Messverfahrens kann ein hoher Automatisierungsgrad und eine hohe Qualität der Messung gewährleistet werden. Die mit dem Messverfahren geprüften Teile müssen zudem vorgängig keine Reinigung und/oder Trocknung durchlaufen.

In vorteilhafter Weise wird das fluide Medium mittels einer Druckmesseinheit durch den Spalt gepresst und wird der Druck dieses fluiden Mediums gemessen und in der Auswerteeinrichtung der Distanzwert ermittelt wird, was sehr einfach ausgeführt werden kann.

Es kann aber auch mittels einer Durchflussmesseinheit die Durchflussmenge des durch den Spalt gepressten fluiden Mediums gemessen und in der Auswerteeinrichtung der Distanzwert ermittelt werden.

In vorteilhafter Weise wird mittels der Druckmesseinheit Luft durch den Spalt geleitet. Ein solches Verfahren hat insbesondere den Vorteil, dass das Messverfahren unter atmosphärischen Bedingungen durchgeführt werden kann.

Der durch dieses Verfahren ermittelte Distanzwert kann aber auch mit einem minimalen und einem maximalen durch entsprechende Eichnormale festgelegten Distanzwert verglichen wird, wobei sofort erkennbar ist, ob dieser innerhalb des festgelegten Toleranzbereichs liegt.

In einer anderen Ausführungsvariante werden der Distanzwert und/oder der Durchflusswert einer nicht linearen pneumatischen Messung in einem Mappingverfahren korrigiert und beispielsweise in Tabellenform in der Auswerteelektronik hinterlegt. Ein solches Verfahren hat insbesondere den Vorteil, dass mit dem Mappingverfahren die Distanzauswertung in Mikrometer mittels Druckvariation oder Durchflusswert kalibriert werden kann.

Nachfolgend wird das erfindungsgemässe Verfahren mit Bezugnahme auf die in der beiliegenden Zeichnung dargestellten Ausführungsvarianten beispielhaft näher erläutert.

Es zeigt
Figur 1 eine Anordnung für ein Messverfahren gemäss dem Stand der Technik.
Figur 2 eine Anordnung für die Durchführung eines erfindungsgemässen Messverfahrens.
Figur 3 eine weitere Anordnung für die Durchführung eines erfindungsgemässen Messverfahrens.

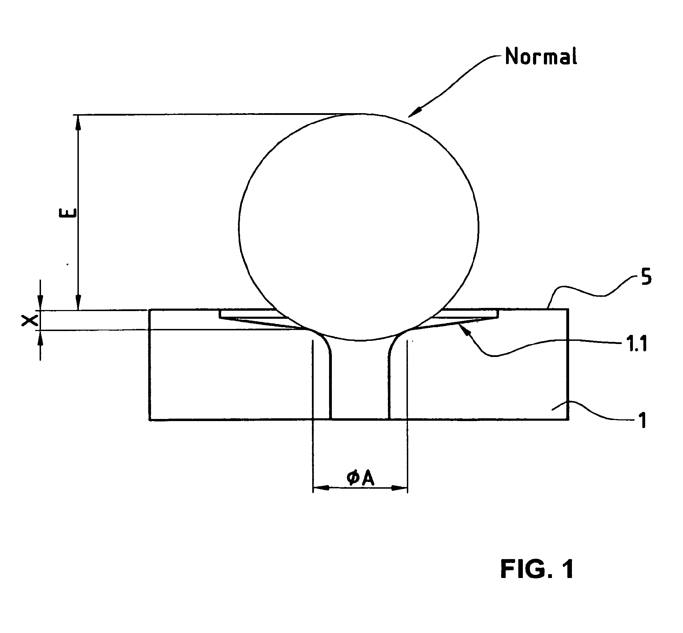

In Figur 1 bezieht sich das Bezugszeichen 1 auf einen Körper und das Bezugszeichen 1.1 auf eine sich verjüngende Fläche, die als Ansenkung ausgebildet ist. Diese Art von Ansenkungen wird z.B. in den Bereichen der Verbrennungsmotoren, insbesondere für Ventilsitze, bei Fluidikelementen, im Medizinalbereich oder anderen Vorrichtungen eingesetzt. Um die Effizienz solcher Ansenkungen mit oder ohne Durchlass zu gewährleisten, müssen insbesondere Parameter der Ansenkung sehr genau hergestellt sein. Für die Messung solcher Parameter ist im Stand der Technik das gemäss Figur 1 dargestellte Messverfahren bekannt. Bei diesem Messverfahren wird ein Eichnormal in die Senkung gelegt. Je nach Messverfahren kann ein solches Normal beispielsweise im Wesentlichen, wie in Figur 1 skizziert, eine Kugel sein oder von irgendeiner anderen Form sein. Nachdem das Eichnormal in der Ansenkung 1.1 angeordnet ist, kann eine Länge E des Eichnormals, das über eine Oberfläche der Basis 5 des Körpers vorstehend ist, bestimmt werden. Aufgrund der Messung der Länge E kann überprüft werden, ob eine Länge X, welche beispielsweise die Ansenktiefe bezeichnet, innerhalb eines vorgegebenen Toleranzbereichs liegt. Es ist ersichtlich, dass beispielsweise Verschmutzungen an der Kugel und/oder an den Ansenkungen falsche Messergebnisse liefern.

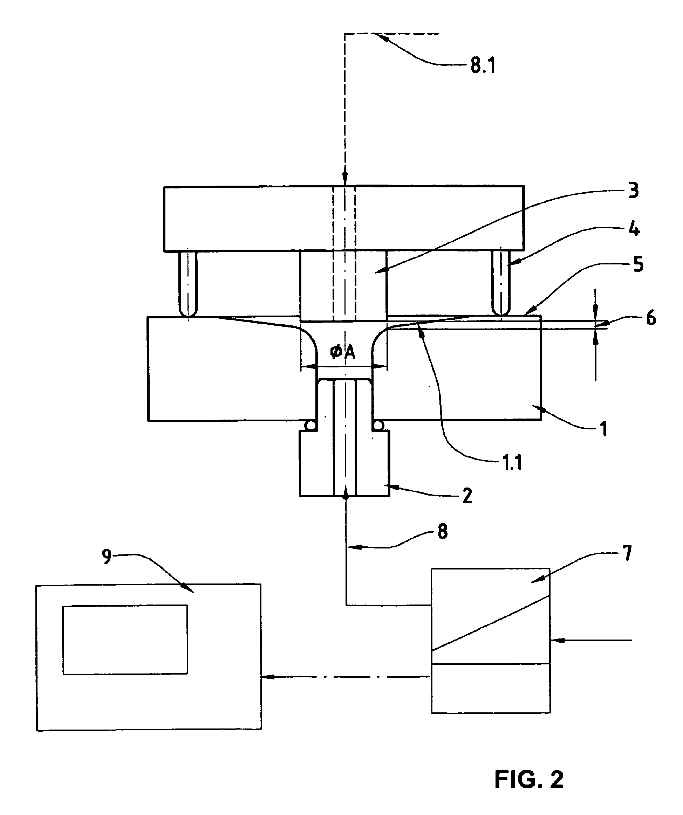

In Figur 2 ist ein erfindungsgemässes Messsystem dargestellt, mit welchem sich das erfindungsgemässe Messverfahren durchführen lässt. Gleiche Elemente sind mit denselben Bezugszeichen versehen wie die erwähnten Elemente in der bekannten Ausführungsform gemäss Fig. 1. In dem in Figur 2 dargestellten erfindungsgemässen Messverfahren wird ein Messkörper 3 mit einem Durchmesser A relativ zur Auflage 5 des Körpers 1 angeordnet. Wie in Figur 2 dargestellt ist, kann der Messkörper 3 beispielsweise mittels der Stützpunkte 4 auf der Auflage 5 angeordnet sein. Dem Fachmann sind verschiedenste Ausführungsvarianten bekannt, um eine relative Anordnung des Messkörpers 3 gegenüber einer Auflage 5 des Körpers 1 zu gewährleisten. Je nach Messverfahren kann sich die relative Anordnung statt auf die Auflage 5 auf irgendeine andere Referenz des Körpers 1 oder der Ansenkung 1.1 beziehen. Der Messkörper 3 ist so eingerichtet, dass bei der relativen Anordnung zu irgendeiner der erwähnten Referenzen zwischen dem Messkörper 3 und der Ansenkung 1.1 mit dem Querschnitt mit dem Durchmesser A ein Spalt 6 besteht. Der Messkörper 3 kann beispielsweise aus einem Zylinder bestehen, der Spalt 6 ist somit ein ringförmiger Spalt. Damit ein gleichmässiger ringförmiger Spalt entsteht, ist die Achse des Messkörpers 3 identisch zur Achse der Ansenkung angeordnet.

In Figur 2 bezieht sich das Bezugszeichen 7 auf eine Druckmesseinheit. Die Druckmesseinheit 7 kann eingerichtet sein, um ein Gas, insbesondere Luft, und/oder eine Flüssigkeit mit einem bestimmten Druck einer Leitung 8 zuzuführen. Wie in Figur 2 skizziert ist, kann das Gas und /oder Flüssigkeit durch die Leitung 8 oder alternativ durch die Leitung 8.1 zugeführt werden. Im Fall der Verwendung von Leitung 8.1 ist die Werkstückaufnahme 2, auf die der auszumessende Körper 1 aufgesetzt werden kann, ohne Bohrung ausgebildet, d.h. die durchgehende Ansenkung ist dicht verschlossen. Wichtig ist, dass das Gas und/oder die Flüssigkeit durch den Spalt 6 abgeführt werden.

Wie in Figur 2 skizziert ist, kann alternativ anstelle der Druckmesseinheit 7 eine Durchflussmesseinheit vorgesehen sein oder es kann eine Kombination mit einer Druck- und einer Durchflussmesseinheit vorgesehen sein.

Wie in Figur 2 dargestellt ist, ist eine Auswerteeinrichtung 9 vorgesehen. Die Auswerteeinrichtung 9 ist eingerichtet, um einen Druckmesswert oder einen Durchflussmesswert einem Distanzwert und/oder einem Durchfluss zuzuordnen. So kann beispielsweise die Auswerteeinrichtung 9 Mittel umfassen, um einen gemessenen Druckwert einer Abweichung der Senktiefe zu einer vorgängigen Einstellung mittels Messnormalen anzuzeigen. Dabei kann als Messnormale ein Basiskörper mit einer Ansenkung verwendet werden, welche exakt die gewünschte Geometrie hat.

Durch Anheben des Messkörpers mit Eichnormalen unter die Abstützung entsteht eine genau definierte neue Distanz. Die Druckvariation zwischen der ersten und der zweiten Position des Messkörpers wird elektronisch berechnet und in Mikrometer angezeigt.

Es können auch beispielsweise drei Messnormale verwendet werden, eine erste Messnormale für einen oberen Toleranzbereich, eine zweite Messnormale für einen mittleren Toleranzbereich und eine dritte Messnormale für einen unteren Toleranzbereich.

Die drei Messnormale definieren einen genauen Distanzwert. Die Auswerteeinrichtung 9 kann dabei Mittel umfassen, um eine Druckmessung einer genauen Distanz oder einem Toleranzbereich zuzuordnen.

Als Druckmesseinheiten 7 können insbesondere handelsübliche Vorrichtungen, wie z.B. pneumatische Messwandler Marposs Typ MRT oder LVDT verwendet werden.

Die Auswerteeinrichtung kann insbesondere eine mikroprozessorbasierte, elektronische Einheit umfassen, mit einem Analog/Digital Wandler zum Wandeln eines elektrischen Signals, welches dem Messwandler entspricht, mit einem programmierbaren Prozessor zum Abarbeiten von Programmcode, mit einer Anzeige zur Darstellung der berechneten Werte und mit Eingabemitteln zur Steuerung oder Modifikation des Herstellungsprozess. Eine solche mikroprozessorbasierte Einheit kann zudem ein Mappingsystem enthalten, mit welchem nichtlineare Werte der Druckmessung in einer linearen Skala in Mikrometer so dargestellt werden, dass diese mit mechanischen Eichnormalen nachgeprüft werden können.

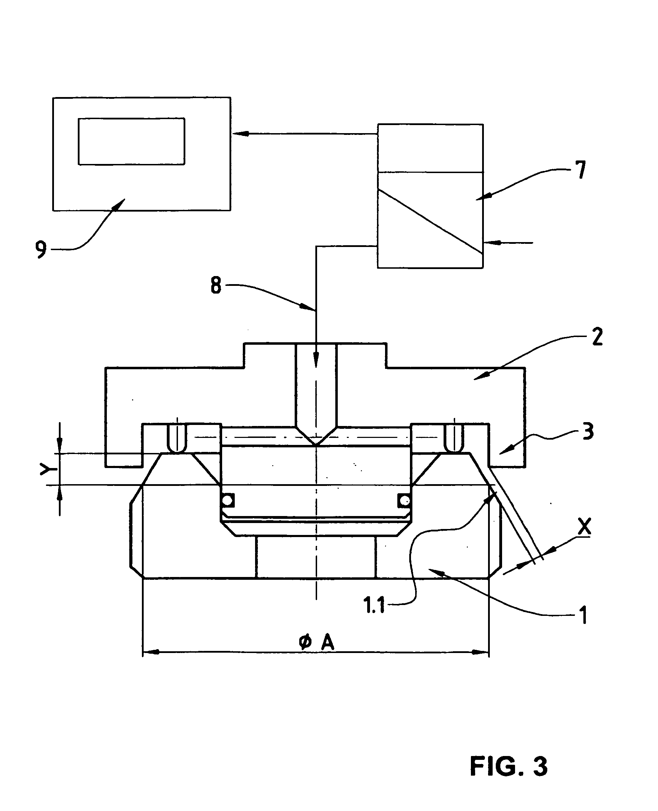

In Figur 3 ist eine Anordnung zur Durchführung des erfindungsgemässen Messverfahrens im Falle eines aussenliegenden Konus skizziert, wobei gleiche Elemente mit denselben Bezugszeichen bezeichnet sind, wie die entsprechenden Elemente des vorgängig beschriebenen Ausführungsbeispiels. Wie in Figur 3 skizziert ist, kann eine Zentriereinheit 2 und ein Messkörper 3 aus einem Körper so gebildet sein, das ein Spalt X zwischen dem Messkörper 3 und einem Konus 1.1 des Körpers 1 besteht, und wobei mittels einer Druckmesseinheit 7 und entsprechenden Durchführungen eines Gases und/oder einer Flüssigkeit durch den Spalt 6 ein Druck gemessen wird. Alternativ kann wiederum statt einer Druckmessung eine Durchflussmessung durchgeführt werden.

## Patentansprüche

1. Verfahren zum Messen einer Distanz von einer Basisfläche (5) zu einem Querschnitt mit einem vorgegebenen Durchmesser (A) einer eine Erhebung oder Vertiefung bildenden, sich verjüngenden Fläche (1.1) mit kreisförmiger Querschnittsform es Körpers (1), **dadurch gekennzeichnet, dass** ein Messkörper (3) mit einem dem vorgegebenen Durchmesser (A) entsprechenden Durchmesser auf der Basisfläche (5) angeordnet wird, derart, dass zwischen der Querschnittfläche mit dem Durchmesser (A) des Körpers (1) und dem Messkörper (3) eine Distanz in Form eines Spaltes (6, X) gebildet wird, und dass ein fluides Medium durch den Spalt (6, X) gepresst wird und der Druck und/oder die Durchflussmenge des fluiden Mediums gemessen wird, und dass aufgrund des gemessenen Drucks bzw. der Durchflussmenge in einer Auswerteeinrichtung (9) der Distanzwert ermittelt wird.

2. Verfahren nach Anspruch 1, **dadurch gekennzeichnet, dass** das fluide Medium mittels einer Druckmesseinheit (7) durch den Spalt (6) gepresst wird und der Druck dieses fluiden Mediums gemessen und in der Auswerteeinrichtung (9) der Distanzwert ermittelt wird.

3. Verfahren nach Anspruch 1, **dadurch gekennzeichnet, dass** mittels einer Durchflussmesseinheit die Durchflussmenge des durch den Spalt (6) gepressten fluiden Mediums gemessen und in der Auswerteeinrichtung (9) der Distanzwert ermittelt wird.

4. Verfahren nach Anspruch 2, **dadurch gekennzeichnet, dass** mittels der Druckmesseinheit (7) Luft durch die Spalt (6) geleitet wird.

5. Verfahren nach einem der Anspruch 1 bis 4, **dadurch gekennzeichnet, dass** der ermittelte Distanzwert mit einem minimalen und einem maximalen durch entsprechende Eichnormale festgelegten Distanzwert verglichen wird.

6. Verfahren nach einem der Ansprüche 1 bis 4, **dadurch gekennzeichnet, dass** in einem Mappingvorgang Abweichungen in der nicht linearen pneumatischen Messung korrigiert und in der Auswerteeinrichtung (9) hinterlegt werden.

## Claims

1. Method for measuring a distance from a base surface (5) to a cross section with a predetermined diameter (A) of a tapering surface (1.1) of a body (1), the tapering surface forming a high area or a low area and having a circular cross-sectional shape,
**characterized in that**,
a measuring body (3) with a diameter corresponding to the predetermined diameter (A) is arranged with respect to the base surface (5) in such a way that a distance is created in the form of a gap (6, X) between the cross sectional surface with the diameter (A) of the body (1) and the measuring body (3); a fluid medium is pressed through the gap (6, X), and the pressure and/or the flow rate of the fluid medium is measured; and on the basis of the measured pressure and/or of the flow rate the distance value is determined in an evaluation unit (9).

2. Method according to claim 1, wherein the fluid medium is pressed through the gap (6) by means of a pressure measuring unit (7), the pressure of this fluid medium is measured, and the distance value is determined in the evaluation unit (9).

3. Method according to claim 1, wherein the flow rate of the fluid medium pressed through the gap (6) is measured by means of a flow measuring unit, and the distance value is determined in the evaluation unit (9).

4. Method according to claim 2, wherein air is conveyed through the gap (6) by means of the pressure measuring unit (7).

5. Method according to any one of claims 1 to 4, wherein the determined distance value is compared with a minimum and a maximum distance value defined by means of corresponding master standards.

6. Method according to any one of claims 1 to 4, wherein in a mapping process deviations in the non-linear pneumatic measurement are corrected and deposited in the evaluation unit (9).

## Revendications

1. Procédé pour mesurer une distance depuis une surface de base (5) jusqu'une section transversale avec un diamètre prédéterminé (A) d'une surface effilée (1.1) d'un corps (1), la surface effilée formant une zone élevée ou une zone basse et ayant une section transversal de forme circulaire,
**caractérisé en ce que**,
un corps de mesure (3) avec un diamètre correspondant au diamètre prédéterminé (A) est agencé par rapport à la surface de base (5) de telle manière qu'une distance est créée en forme d'un espace vide (6, X) entre la surface de la section transversal avec le diamètre (A) du corps (1) et le corps de mesure (3); un moyen fluide est comprimé à travers l'espace vide (6, X) et la pression et/ou le débit du moyen fluide est mesuré(-ée); et la valeur de la distance est déterminée dans une unité d'évaluation (9) sur la base de la pression mesurée et/ou du débit.

2. Procédé selon la revendication 1, dans lequel le moyen fluide est comprimé à travers l'espace vide (6) à l'aide d'une unité de mesure de la pression (7), la pression de ce moyen fluide est mesurée et la valeur de la distance est déterminée dans l'unité d'évaluation (9).

3. Procédé selon la revendication 1, dans lequel le débit du moyen fluide comprimé à travers l'espace vide (6) est mesuré à l'aide d'une unité pour mesurer l'écoulement, et la valeur de la distance est déterminée dans l'unité d'évaluation (9).

4. Procédé selon la revendication 2, dans lequel de l'air est amené à travers l'espace vide (6) à l'aide de l'unité de mesure de la pression (7).

5. Procédé selon l'une quelconque des revendications 1 à 4, dans lequel la valeur prédéterminée de la distance est comparée avec une valeur minimale et avec une valeur maximale de la distance définies à l'aide d'étalons correspondants.

6. Procédé selon l'une quelconque de revendications 1 à 4, dans lequel, dans un processus de mise en correspondance, des écarts dans la mesure pneumatique non linéaire sont corrigés et déposés dans l'unité d'évaluation (9).
